Europäisches Patentamt

European Patent Office

Office européen des brevets

(19)

(11) Publication number: **0 158 377**
**B1**

(12) **EUROPEAN PATENT SPECIFICATION**

(45) Date of publication of patent specification: **07.09.88**

(21) Application number: **85200285.6**

(22) Date of filing: **28.02.85**

(51) Int. Cl.⁴: **F 16 L 33/22**

(54) Autolocking fitting for pipes in particulair having a structure strenghthened by wire like elements.

(30) Priority: **13.03.84 IT 2002084**

(43) Date of publication of application:
**16.10.85 Bulletin 85/42**

(45) Publication of the grant of the patent:
**07.09.88 Bulletin 88/36**

(84) Designated Contracting States:
**AT CH DE FR GB LI NL SE**

(56) References cited:
**DE-B-1 252 984**
**FR-A-1 207 292**
**GB-A-1 494 377**
**US-A-2 473 092**
**US-A-2 940 778**

(73) Proprietor: **Talé, Paolo**
**Via Mozart 13**
**I-40100 Bologna (IT)**

(72) Inventor: **Talé, Paolo**
**Via Mozart 13**
**I-40100 Bologna (IT)**

(74) Representative: **Giambrocono, Alfonso, Dr. Ing.**
**et al**
**Ing. A. Giambrocono & C. S.r.l. Via Rosolino Pilo 19/B**
**I-20129 Milano (IT)**

Courier Press, Leamington Spa, England.

## Description

The present invention relates to an autolocking fitting for pipes, in particular having a structure strengthened by wire-like elements.

Several fittings are known effective to be applied to the end portions of pipes, which fittings are affected by a number of drawbacks, in that they, lacking of sufficient autolocking characteristics, are not able of assuring a sufficient tightness to the tensile stresses affecting the coupled pipe elements and when the pressure circulating in said pipe elements is high, in that they, after installation, may be hardly recovered (that is may not be reused), and in that they are of a comparatively complex structure, high cost and scarcely usable in a broad range of applications.

In particular the known fittings fail mainly as the pipes to be coupled have a structure strengthened by wire-like elements.

In that case the cut through zone of such a pipe is hardly a perfect one, because the wire-like elements break away thereby projecting from the cut region.

The fact causes two drawbacks to occur:

upon mounting, it is difficult, because of the projecting wire-like elements, to properly locate the bush or collar members forming the joints. After having carried out said locating operation, the cut region will be yet more imprecise, because of the greater breaking of the textile element,

as the joint is tight clamped, said wire or thread like elements, if there are not properly united or trimmed, may interfere with the tightness surfaces, thereby an objectionable leakage will occur.

Fittings of the above mentioned known type are disclosed in the U.S. patents 2 473 092 and 2 940 778, in the German patent DE 1 252 984, in the French patent 1 207 292 and in the British patent 1 494 377, but all of such patents suffer of the mentioned drawbacks.

For example, the U.S. patent no. 2 473 092 discloses a hose clamp comprising an expander or connecting element 19 with tapered portion 23 and cylindrical portion 22 slipped out into the inside of a hose 10.

The hose 10 is pressed on the cylindrical portion 22 of the element 19 by slip jaws 11 radially pressed inwardly by a bushing 14 screwed upon a sleeve 24 housing said element 19: the hose is also pressed by the tapered portion 23 of the element 19 against the cylindrical surface of a sleeve 18, it too housed within the sleeve 24.

It is obvious that if the thickness of the hose 10 decreases either because it becomes aged and shrinks or because it is strongly stretched, the hose will tend to slip away from the clamp with consequent losses of the fluid circulating in the hose: in order to ensure sealing, the U.S. patent teaches that it is necessary to screw more and more the bushing 14 on the sleeve 24.

Accordingly, the task of the present invention is to provide such an autolocking pipe fitting ensuring a perfect sealing against fluid losses and which is effective to facilitate the assembling and disassembling operations even in the case wherein the pipes have a structure strengthened by wire or thread-like elements.

Within that task, it is a main object of the present invention to provide such a fitting having a comparatively reduced cost and effective to be completely recovered and reused, and not to obstruct the passage of the fluid at the fitting.

According to one aspect of the present invention the above task and object, as well as yet other objects which will become more apparent hereinafter, are achieved by an autolocking fitting for pipes according to claim 1.

The invention will be hereinafter disclosed and illustrated, by way of example, with reference to the figures of the accompanying drawing, where:

figure 1 is a partially sectioned exploded view of the fitting or pipe joint according to the invention;

figure 2 is a partially sectioned view of that joint or fitting with one end thereof coupled to a pipe; and

figure 3 is a cross-section view taken through the line II—II of fig. 2.

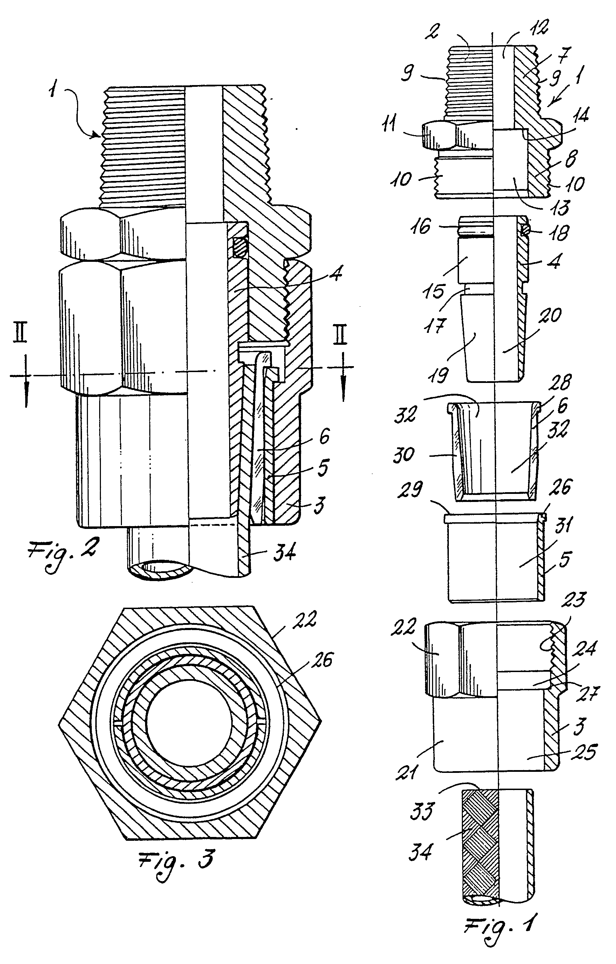

With reference to the above mentioned figures, the fitting or joint according to the invention, as overally indicated at 1, comprises: a first tubular body 2 and a second tubular body 3, as well as an expander 4, a bush 5 and a pair of semicircular shells 6, whereof one only has been shown in figure 1.

The first tubular body 2 comprises a first and second cylindrical portions 7 and 8, provided with outside threads 9 and 10 respectively bridging a driving element 11. The first cylindrical portion 7 comprises a duct 12 being coupled to a duct 13 of the second cylindrical portion 8 at a shoulder 14.

The second tubular body 3 comprises a cylindrical portion 21 with a subsequent driving element 22 the inside thereof is threaded at 23.

Said thread ends at an annular chamber 24, arranged between said thread and a duct 25 and defining with the latter a shoulder 27.

The expander 4 consists of a cylindrical portion 15, having such a diameter as to abut against the shoulder 14 and included between two recessed portions 16 and 17 respectively a top and lower one, the top one whereof is effective to house a O-ring member 18. A tapered portion 19 is provided adjoining said recessed portion 17, also traversed by a cylindrical duct 20.

The bush 5 has a cylindrical shape and, at one end thereof, is provided with a collar or flange 26 the shape and size whereof are substantially complementary with respect to the annular chamber 24 and related shoulder 27.

The half-shells 6 are provided at the top portion of an edge 28 having such a diameter as to abut on the top surface 29 of the collar 26, the maximum diameter of the body, as measured at the point 30 at a level of about ¾ of the height of said body, interfering with the inner duct 31 of the bush 5. In its inside the half-shell 6 has a tapered portion 32 complementary to the tapered portion 19 of the expander 4.

Assembling procedure

The end portion 33 of a pipe 34 of the strengthened structure type is inserted into the second tubular body 3: that operation, because of the comparatively great clearance between the duct 25 and pipe 34, is an easy one.

Then the bush 5 is threaded on the end portion of the pipe 33 as far as the shoulder 26 is located at the annular chamber 24 in such a way as to abut against the shoulder 27.

The latter operation is also an easy one, owing to the difference yet existing between the inner diameter of the bush and the pipe outer diameter.

The half-shell pairs 6 are superimposed on the end portion of the pipe in such a way that the end portion 33 thereof is located at the inner portion of the edging 28.

Then the half-shells are simultaneously jointed to the pipe inside the bush 5, in such a way that the edge 28 coincides with the inner portion of the collar 26 by abutting thereon and arranging itself in the annular chamber 24.

Also that operation is an easy one, owing to the clearance yet existing between the pipe 34, half-shells 6 and bush 5.

Then the expander 4 is progressively force-inserted into the pipe 34, thereby spreading the end portion 33 thereof as far as to cancel the clearance between the elements 3, 5, 6, 34.

The first tubular body 2 is then screwed on the second tubular body 3 in such a way as to engage the thread 10 with the thread 23.

The expander 4, as it abuts against the shoulder 14, will be forced inside the pipe 34.

Then the tapered portion 19 will provide the set pressure on the inside walls of the pipe in such a way as to assure the required mechanical and hydraulic tightness and by forcing the elements 34, 6, 5 and 3.

After the clamping step, the top thread or portion 33 of the pipe 34 will resiliently engage the lower recessed portion 17 of the expander 4, thereby contributing in a great degree to the counterbiassing of the possible stresses susceptible to disengage the pipe from the fitting.

The cylindrical portion 15 is coupled with clearance to the walls of the duct 13 which act as a guide for said expander, the O-ring 18 provided the hydraulic tightness and preventing leakage through said surfaces from occurring.

The the second pipe length, not shown, is coupled to the joint 1 in a conventional way through the thread 9.

## Claims

1. An autolocking fitting for pipes, comprising first (2) and a second (3) tubular bodies provided with threads (10, 23) for screwing one body (3) on the other (2), a bush element (5) associated with the second tubular body (3), a pair of shells, (6) in turn housed, either coupled or separated, inside said element (5) and defining a tapered portion (32), and a hollow expander element (4) having a cylindrical portion (15) located inside a cylindrical duct (13) of said first body (2) and having a tubular extension traversed by a cylindrical duct (20) and extending between said shells (6) while leaving a free annular space between the opposite surfaces (19, 32) of the tubular extension of the expander element (4) and of the shells (6) for housing the free end of a pipe, characterized in that the bush element is an element housed inside the second tubular body the external surface (19) of the tubular extension of the expander element (4) is tapered complementarily with respect to the internal surface of said tapered portion (32) of the shells, with a minimum diameter at its free end, in that the expander element (4) is freely axially slidable in respect of first and second bodies (2, 3) of the bush element (5) and of the shells (6) in that said shells (6) are provided at their inner end portion with a projecting edge (28) engaging the end face of the bush element (5), and in that a sealing ring (18) is housed in an annular groove (16) to seal the cylindrical portion (15) of the expander element (4) with the cylindrical duct (13) of the body (2).

2. An autolocking fitting according to claim 1, characterized in that the first tubular body (2) is provided on its outside with first (9) and second (10) outer threads and with a driving element (11) interposed between said two threads and, on its inside, with first (12) and second (13) ducts, separated by a shoulder (14).

3. An autolocking fitting according to claims 1 and 2 characterized in that the second tubular body (3) consists of a cylindrical portion (21), a driving element (22), a thread (23), an annular chamber (24), a duct (25) and a shoulder (27), the cylindrical portion (21) and driving element (22) being successively arranged as respectively associated with the duct (25) and thread (23) with the interposition of the annular chamber (24) and related shoulder (29).

4. A device according to claims 1 to 3 characterized in that the expander element (4) is provided with a recessed portion (17) located between said cylindrical portion (15) and said tapered portion (19).

5. A device according to claim 1 to 4, characterized in that the bush element (5) is provided, at one end thereof, with a collar (26).

### Patentansprüche

1. Selbstsperrende Kupplung für Rohre, mit einem ersten (2) und einem zweiten (3) rohrförmigen Körper, die mit Gewinden (10, 23) versehen sind, um einen Körper (3) an den anderen (2) anzuschrauben, einem Büchsenelement (5), das dem zweiten rohrförmigen Körper (3) zugeordnet ist, einem Paar Schalen (6), die ihrerseits entweder zusammengesetzt oder getrennt im Inneren de Elements (5) angeordnet sind und einen verjüngten Abschnitt (32) bilden, und einem hohlen Aufweitelement (4), das einen zylindrischen Abschnitt (15) aufweist, der im Inneren eines zylindrischen Kanals (13) des ersten Körpers (2) angeordnet ist und eine rohrförmige Verlängerung aufweist, die durch einen zylinderischen Kanal (20) durchdrungen wird und sich zwischen den Schalen (6) erstreckt, während ein freier Ringraum zwischen den gegenüberliegenden Flächen (19, 32) der rohrförmigen Verlängerung des Aufweitelements (4) und den Schalen (6) verbleibt, um das freie Ende eines Rohres aufzunehmen, dadurch gekennzeichnet, daß das Büchsenelement ein im Inneren des zweiten rohrförmigen Körpers untergebrachtes Element ist, die Außenfläche (19) der rohrförmigen Verlängerung des Aufweitelements (4) komplementär in Bezug auf die Innenfläche des verjüngten Abschnitts (32) der Schalen verjüngt ist, und zwar mit einem kleinsten Durchmesser an ihrem freien Ende, das Aufweitelement (4) frei axial in Bezug auf den ersten und zweiten Körper (2, 3), das Büchsenelement (5) und die Schalen (6) verschieblich ist, die Schalen (6) an ihrem inneren Endabschnitt mit einer vorspringenden Kante (28) versehen sind, die mit der Endfläche des Büchsenelements (5) in Eingriff tritt, und ein Dichtungsring (18) in einer Ringnut (16) aufgenommen ist, um den zylindrischen Abschnitt (15) des Aufweitelements (4) gegenüber dem zylindrischen Kanal (13) des Körpers (2) abzudichten.

2. Selbstsperrende Kupplung nach Anspruch 1, dadurch gekennzeichnet, daß der erste rohrförmige Körper (2) an seiner Außenseite mit einem ersten (9) und einem zweiten (10) Außengewinde und mit einem Antriebselement (11) versehen ist, das zwischen den beiden Gewinden angeordnet ist, sowie an seiner Innenseite mit einem ersten (12) und einem zweiten (13) Kanal, die durch eine Schulter (14) getrennt sind.

3. Selbstsperrende Kupplung nach Anspruch 1 und 2, dadurch gekennzeichnet, daß der zweite rohrförmige Körper (3) aus einem zylindrischen Abschnitt (21), einem Antriebselement (22), einem Gewinde (23), einer ringförmigen Kammer (24), einem Kanal (25) und einer Schulter (27) besteht, wobei der zylindrische Abschnitt (21) und das Antriebselement (22) aufeinanderfolgend angeordnet sind und dem Kanal (25) bzw. dem Gewinde (23) zugeordnet sind, wobei die ringförmige Kammer (24) und die zugeordnete Schulter (29) dazwischen angeordnet sind.

4. Vorrichtung nach Anspruch 1 bis 3, dadurch gekennzeichnet, daß das Aufweitelement (4) mit einem ausgesparten Abschnitt (17) versehen ist, der zwischen dem zylindrischen Abschnitt (15) und dem verjüngten Abschnitt (19) angeordnet ist.

5. Vorrichtung nach Anspruch 1 bis 4, dadurch gekennzeichnet, daß das Büchsenelement (5) an seinem einen Ende mit einem Kragen (26) versehen ist.

**Revendications**

1. Raccord à verrouillage automatique pour tuyaux, comprenant un premier (2) et un deuxième (3) corps tubulaires munis de filets (10, 23) pour visser l'un de corps (3) sur l'autre (2), un coussinet (5) associé au deuxième corps tubulaire (3), deux enveloppes (6) logées respectivement, ensemble ou séparément, à l'intérieur dudit élément (5) et délimitant une partie conique (32), et un élément creux d'expansion (4) présentant une partie cylindrique (15) située à l'intérieur d'une conduite cylindrique (13) dudit premier corps (2), dont un prolongement tubulaire est traversé par une conduite cylindrique (20) et qui s'étend entre lesdites enveloppes (6) en ménageant un espace annulaire libre entre les surfaces (19, 32) en regard du prolongement tubulaire de l'élément d'expansion (4) et des enveloppes (6) pour loger l'extrémité libre d'un tuyaux, caractérisé en ce que le coussinet est un élément logé dans le deuxième corps tubulaire, la surface extérieure (19) du prolongement tubulaire de l'élément d'expansion (4) est tronçonnée pour servir de complément à la surface intérieure de ladite partie tronçonnée (32) des enveloppes, l'extrémité libre ayant un diamètre minimum, que l'élément d'expansion (4) peut coulisser librement axialement par rapport aux premier et deuxième corps (2, 3) du coussinet (5) et des enveloppes (6), que l'extrémité intérieure desdites enveloppes (6) est munie d'un bord en saillie (28) coopérant avec la surface terminale du coussinet (5) et qu'une bague d'étanchéité (18) est logée dans une rainure annulaire (16) pour connecter de manière hermétique la partie cylindrique (15) de l'élément d'expansion (4) à la conduite cylindrique (13) du corps (2).

2. Raccord à verrouillage automatique selon la revendication 1, caractérisé en ce que l'extérieur du premier corps tubulaire (2) possède un premier (9) et deuxième (10) filets extérieurs et un élément d'entraînement (11) interposé entre lesdits filets et, à l'intérieur, de premières (12) et deuxièmes (13) conduites séparées par un épaulement (14).

3. Raccord à verrouillage automatique selon les revendications 1 et 2, caractérisé en ce que le deuxième corps tubulaire (3) consiste en une partie cylindrique (21), un élément d'entraînement (22), un filet (23), une chambre annulaire (24), une conduite (25) et un épaulement (27), la partie cylindrique (21) et l'élément d'entraînement (22) étant disposés successivement pour être associés à la conduite (25) et au filet (23), la chambre annulaire (24) et l'épaulement correspondant (29) étant interposés.

4. Dispositif selon les revendications 1 à 3, caractérisé en ce que l'élément d'expansion (4) présente un évidement (17) situé entre ladite partie cylindrique (15) et ladite partie tronçonnée (19).

5. Dispositif selon la revendication 1 à 4, caractérisé en ce que le coussinet (5), présente à l'une de ses extrémités une collerette (26).

Fig. 2

Fig. 3

Fig. 1